Europäisches Patentamt

European Patent Office

Office européen des brevets

(11) Veröffentlichungsnummer: **0 318 432**
A2

## (12) EUROPÄISCHE PATENTANMELDUNG

(21) Anmeldenummer: 88810787.7

(22) Anmeldetag: 16.11.88

(51) Int. Cl.4: **B 01 D 17/025**
C 02 F 1/40, B 01 D 21/02

(30) Priorität: 23.11.87 CH 4541/87

(43) Veröffentlichungstag der Anmeldung:
31.05.89 Patentblatt 89/22

(84) Benannte Vertragsstaaten:
AT BE DE FR IT LU NL

(71) Anmelder: Perren, Elsa
Austrasse 33
CH-5430 Wettingen (CH)

(72) Erfinder: Perren, Benno
verstorben (CH)

(74) Vertreter: Winkler, Kurt, Dr.
Mellingerstrasse 69
CH-5400 Baden (CH)

(54) Wasserbehandlungsanlage für Abwässer.

(57) Zur Abtrennung von Schlamm und freien Kohlenwasserstoffen wird das verunreinigte Abwasser in das Sammelbecken (1) geleert. Kies und stückige Verunreinigungen bleiben am Gitter (9) zurück. Grobe Setzstoffe sammeln sich in der Schlammrinne (5), von wo sie mit einem Greifer entfernt werden. Das so vorgereinigte Wasser strömt durch den Überlauf (12) in das Ablagerungsbecken (2), wo sich bei längerer Verweilzeit Feinschlamm absondert und auf den Boden (10) sinkt. Wenn der Wasserspiegel im Ablagerungsbecken eine vorbestimmbare Maximalhöhe erreicht hat, wird das Wasser bis auf eine festlegbare Minimalhöhe abgepumpt und zur Weiterbehandlung dem Behandlungsbehälter (19) zugeführt. Angesammelte Kohlenwasserstoffe werden gelegentlich abgesaugt. Der abgesetzte Feinschlamm wird von Zeit bei geleerten Becken (1,2) durch die Durchlässe (13) in das Sammelbecken (1) geschoben und zusammen mit den in der Schlammrinne (5) angesammelten Setzstoffen entfernt.

Nach einer vorteilhaften Ausgestaltung des Erfindungsgedankens sind die Becken (1,2) durch paralle zur Zeichenebene gezogene Wände in Sektionen unterteilt, welche durch die Auslaufrinne (22) miteinander verbunden sind. Dies erlaubt, für Reparatur- oder Reinigungszwecke einzelne Sektionen auszuschalten und den Betrieb mit den übrigen Sektionen voll aufrechtzuerhalten.

FIG.1

Bundesdruckerei Berlin

**Beschreibung**

## Wasserbehandlungsanlage für Abwässer

Die Erfindung betrifft eine Wasserbehandlungsanlage zur Abtrennung von Schlamm und freien Kohlenwasserstoffen aus verunreinigten, auch Tenside enthaltenden Abwässern, sowie ein Verfahren zum Betrieb dieser Anlage.

In regionalen Wasseraufbereitungsanlagen fallen verunreinigte, auch Tenside enthaltende Abwässer verschiedenster Herkunft an, z.B. auf Strassenschächten, Öl- und Benzinabscheidern, Garagen und Industriebetrieben. Demgemäss sind die Beimischungen und mitgeführten Feststoffe stark unterschiedlich. Der Schlammanteil dieser Abwässer beträgt ca. 10 - 15 % des gesamten Wasservolumens. Dieser Schlamm und die freien Öle dürfen nicht einer Emulsionstrennanlage zugeführt werden und müssen daher vorher entfernt werden, was bisher in ausgedehnten Becken erfolgte. Das Problem der Entfernung des abgesetzten Schlammes ist nicht gelöst und die Becken sind hinsichtlich der auftretenden Strömung bei der Beschickung keineswegs optimal ausgelegt. In den bekannten mechanischen Einrichtungen wie Band- und Trommelfilter, Zentrifugen (Dekanter) usw. wird der Grob- und Feinschlamm nicht in genügendem Ausmass abgetrennt und der wirtschaftliche Aufwand für den Betrieb ist gross.

Der Erfindung liegt die Aufgabe zugrunde, eine Wasserbehandlungsanlage der eingangs genannten Art zu schaffen, welche die Abtrennung sowohl von Grob- als auch von Feinschlamm unter möglichster Ausnützung der natürlichen physikalischen Kräfte erlaubt, und ein Verfahren für den Betrieb einer solchen Anlage anzugeben.

Diese Aufgabe wird durch die kennzeichnenden Merkmale der Ansprüche 1 und 13 gelöst.

Aus der Grossdimensionierung des Sammelbeckens resultiert eine hohe Speicherkapazität, wodurch grössere Schwankungen der Niveauhöhe und daraus sich ergebender stärkerer Strömungen im Wasser sowie zu rasches Abströmen des von Setzstoffen noch ungenügend befreiten Abwassers vermieden werden. So steht genügend Zeit zur Verfügung, insbesondere wenn im Sammelbecken auch noch ein Beruhigungsraum vorgesehen ist, dass vom Abwasser mitgeführte Verunreinigungen wie Grobschlamm, feiner Sand, Gras, Kunststoffe, Lumpen, Putzfäden usw. sich absetzen und von Zeit zu Zeit aus der Schlammrinne entfernt werden können. Grobe Verunreinigungen wie Kies, stückiges Gut und ähnliches werden zweckmässigerweise schon bei der Zubringung des Abwassers abgeschieden.

Im Ablagerungsbecken, das durch den Überlauf in natürlicher Kommunikation mit dem Sammelbecken steht, kann die Niveauhöhe innerhalb zweier Grenzwerte geregelt werden. Durch die Grossflächigkeit des Beckens ändert sich die Höhe des Wasserspiegels sehr langsam und es stellt sich nur eine kaum wahrnehmbare, auf jeden Fall nur laminare Strömung ein. Wenn die Ausmündung des Überlaufs möglichst weit entfernt vom Standort der Pumpe angeordnet ist, hat das Abwasser die grösste Verweilzeit im Ablagerungsbecken und kann den Feinschlamm abgeben, der sich am Boden des Beckens ansammelt, was bisher bestenfalls in geringem Masse zu verwirklichen war. Vorteilhafterweise wird der Feinschlamm, sobald sich genug abgelagert hat, in die Schlammrinne befördert und zusammen mit den dort angesammelten groben Setzstoffen abtransportiert.

Ein weiterer Vorteil ergibt sich, wenn Sammel- und Ablagerungsbecken in Sektionen unterteilt sind, die jede für sich allein voll betriebsfähig ist. Es ist dann nicht nur möglich, einzelne Sektionen für Reparatur- oder Reinigungszwecke auszuschalten, sondern es kann auch durch Variierung der Sektionenzahl die Anlage den jeweiligen Bedürfnissen besser angepasst werden.

Anhand der in der beigefügten Zeichnung schematisch dargestellten Ausführungsbeispiele wird nachstehend die Erfindung näher erläutert. Es zeigen:

Fig.1 eine Anlage mit Ausmündung des Überlaufs unmittelbar hinter der Trennwand im Längsschnitt;

Fig.2 einen Teilausschnitt der Anlage nach Fig.1 in Draufsicht;

Fig.3 eine Anlage mit Ausmündung des Überlaufs in annähernd grösstem Abstand von der Trennwand im Längsschnitt.

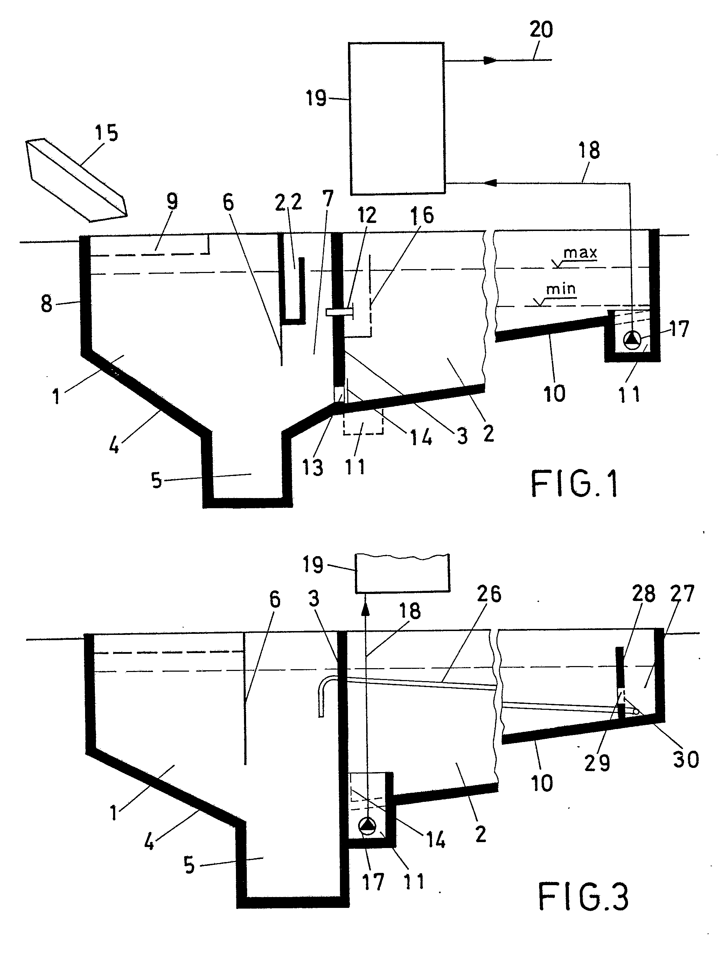

Wie aus Fig. 1 ersichtlich ist, besteht die Wasserbehandlungsanlage im wesentlichen aus dem Sammelbecken 1 und dem Ablagerungsbecken 2, welche durch die Trennwand 3 voneinander getrennt sind. Der Boden 4 des Sammelbeckens 1 ist gegen die Mitte hin geneigt; an seinem tiefsten Punkte ist die Schlammrinne 5 eingelassen. In das Sammelbecken ist die Leitwand 6 eingebaut, wodurch der Beruhigungsraum 7 gebildet ist. Oberhalb des Wasserspiegels ist anschliessend an die Beckenwand 8 das Gitter 9 angeordnet.

Auch der Boden 10 des Ablagerungsbeckens 2 hat ein Gefälle, und zwar gegen die Trennwand 3 hin. Der letzteren diametral gegenüberliegend ist im Boden 10 der Pumpensumpf 11 vorgesehen.

In die Trennwand 13 sind mindestens zwei verschiedene Durchführungen eingelassen, durch welche die beiden Becken 1 und 2 miteinander verbunden sind. Die eine ist das absperrbare Rohr 12, welches den Überlauf bildet. Üblicherweise sind deren mehrere vorhanden. Die Einmündung in das Rohr 12 liegt im Beruhigungsraum 7. Die andere Durchführung ist der Durchlass 13, welcher in der Höhe des angrenzenden Bodens 10 des Ablagerungsbeckens angeordnet ist. Auch von ihm sind normalerweise mehrere vorhanden. Er wird vom Schieber 14 dicht verschlossen, damit kein ungenügend vorgereinigtes Abwasser aus dem Sammelbecken überfliessen kann.

Der Betrieb dieser Anlage läuft folgendermassen ab:

Das verunreinigte Abwasser wird in Kippmulden 15 angeliefert und in das Sammelbecken 1 geleert, wobei grobe Verunreinigungen wie Kies, stückiges Gut usw. auf dem Gitter 9 zurückbleiben, wenn sie nicht schon in der Mulde 15 zurückbehalten werden können. Das Wasser fliesst langsam, abhängig von der menge des Nachschubs, unter der Leitwand 6 vorbei und strömt in den Beruhigungsraum 7. Schwerere Verunreinigungen wie Sand und gröbere Schlammpartikel setzen sich am geneigten Boden 4 ab und gelangen von dort in die Schlammrinne 5. Leichtere, vorerst noch schwebend mitgeführte Verunreinigungen haben genügend Zeit, insbesondere nach der Strömungsberuhigung im Raum 7, nach unten zu sinken und ebenfalls in die Schlammrinne 5 zu gelangen. Von hier werden die angesammelten Verunreinigungen von Zeit zu Zeit, je nach Bedarf, mit einem Greifer herausgehoben und abtransportiert. Es ist dazu nicht nötig, das Sammelbecken 1 vorher zu entleeren.

Während des Normalbetriebes sind das Sammelbecken 1 und ebenso das Ablagerungsbecken 2 voll Wasser. Da durch das Nachschütten von Abwasser der Wasserspiegel im Sammelbecken zumindest zeitweise höher ist als im Ablagerungsbecken, läuft nach dem Gesetz der kommunizierenden Gefässe das Wasser aus dem Beruhigungsraum 7 durch das Rohr 12 in das Ablagerungsbecken über, ohne dass dazu mechanische Hilfsmittel benötigt werden. Wegen der grossen Oberfläche des Ablagerungsbeckens steigt das Wasser darin sehr langsam an und es findet nur eine minimale Strömung statt. Um auch bei der Ausmündung des Rohres 12 eine mögliche Durchwirbelung zu vermeiden, ist davor das Sieb 16 vorgesehen, das einerseits als Prallwand, andererseits zur Verteilung des zuströmenden Wassers über die ganze Beckenbreite dient.

Das Wasser im Ablagerungsbecken 2 gibt über längere Zeit Feinschlamm ab, der sich auf dem Boden 10 ansammelt. Der Pumpensumpf 11 wird möglichst weit entfernt von der Ausmündung des Überlaufs angeordnet, damit jedes Wasserteilchen die ganze Beckenlänge durchströmen muss und so seine Verweilzeit ausgedehnt wird.

Es braucht verhältnismässig lange, bis sich genügend Feinschlamm angesammelt hat und es zweckmässig wird, ihn zu entfernen. Während dieser Zeit wird das Wasser, je nach seiner Belastung, mehrmals oder sogar oft ausgewechselt. Durch die Beschickung des Sammelbeckens steigt auch der Wasserspiegel des kommunizierenden Ablagerungsbeckens an. Sobald er eine festlegbare obere Grenze erreicht hat, in der Zeichnung mit "max" bezeichnet, wird die Tauchpumpe 17 im Pumpensumpf 11, wo sie zweckmässigerweise stationär angeordnet ist, betätigt. Der Wasserspiegel sinkt ab, bis er eine gleichfalls wählbare untere Grenze erreicht hat, in der Zeichnung mit "min" bezeichnet, worauf die Pumpe stillgesetzt wird. Das Zu- und Abschalten der Pumpe in Abhängigkeit von der Niveauhöhe kann selbstverständlich durch eine an sich bekannte einfache Regelung erfolgen.

Das nun auch vom Feinschlamm befreite Wasser wird über die Leitung 18 in den Behandlungsbehälter 19 gepumpt und anschliessend über die Leitung 20 einer (nicht gezeichneten) Emulsionstrennanlage zugeführt, bevor es in die Kanalisation weitergeleitet werden kann, da praktisch jedes Abwasser Emulsionen enthält. Da das abgepumpte Wasser nur schwach mit Emulsionen belastet ist, kann es im Behandlungsbehälter mit Bohrölemulsionen oder anderen industriellen, schwer trennbare Emulsionen enthaltenden Abwässern vermischt werden, die nach einer solchen Verdünnung in der Emulsionstrennanlage kostengünstiger getrennt werden können.

Mit der Zeit bildet sich auf der Wasseroberfläche des Ablagerungsbeckens eine Ölschicht aus. Um das Öl nicht unkontrolliert mit dem Wasser abzupumpen, ist der oben genannte minimale Wasserspiegel etwas höher als der obere Rand des Pumpensumpfes 11 zu wählen. Die Ölschicht muss gelegentlich entfernt werden. Dazu wird das Überlaufrohr 12 abgesperrt und so lange das Wasser aus dem Ablagerungsbecken in den Behandlungsbehälter 19 gepumpt und dort verarbeitet, bis die Ölschicht den Pumpensumpfrand erreicht. Nun wird mit der selben Pumpe 17 das Öl abgesaugt und in den Behandlungsbehälter 19 gepumpt, der vorher geleert wurde. Nach einer gewissen Verweilzeit haben sich Öl und mitabgepumptes Wasser getrennt. Letzteres lässt man ins Ablagerungsbecken zurückfliessen, das abgeschiedene Öl wird gesondert abgeführt.

Um den Feinschlamm aus dem Ablagerungsbecken 2 zu entfernen, muss vorher das Wasser aus dem Sammelbecken 1, da es mit sinkendem Wasserspiegel nicht mehr von selbst überläuft, bis auf die Höhe der Schlammrinne 5 abgepumpt und in das Ablagerungsbecken gefördert werden. Nun wird auch diese bis auf das tiefstmögliche Niveau leergepumpt, indem das Wasser dem Behandlungsbehälter 19 zugeführt wird. Für diesen Arbeitsgang ist es zweckmässig, wenn an der tiefsten Stelle das Ablagerungsbeckens noch ein weiterer Pumpensumpf 11 vorgesehen wird. War noch eine Ölschicht vorhanden, so ist diese nun noch konzentrierter und wird zuletzt, wie oben beschrieben, zur Weiterbehandlung in den Behandlungsbehälter gepumpt.

Nun wird der Schieber 14 geöffnet und der Feinschlamm, dessen Mächtigkeit ohne weiters 10 - 30 cm betragen kann, wird mit einem Räumer durch den Durchlass 13 in das Sammelbecken 1 geschoben, wo er weiter entwässert wird. Der Feststoffanteil sedimentiert mit den in der Schlammrinne 5 angesammelten Absonderungen und wird zusammen mit diesen durch einen Greifer entfernt.

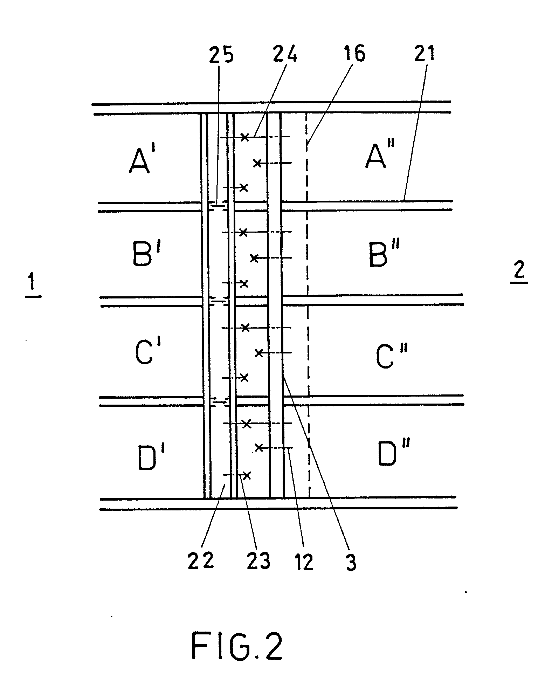

Zu Reinigungs- oder Reparaturzwecken, aber auch zur beschriebenen Förderung des Feinschlamms aus dem Ablagerungs- in das Sammelbecken ist es vorteilhaft, wenn diese Becken durch - parallel zur Zeichenebene verlaufende -Wände in Sektionen unterteilt sind. Eine solche Ausführung ist aus Fig.2 ersichtlich, in der ein Teilausschnitt der Anlage nach Fig. 1 im Grundriss dargestellt ist. Sowohl das Sammelbecken 1 als auch das Ablagerungsbecken 2 sind mit Hilfe der durchlaufenden Wände 21 in die Sektionen A', B', C', D' bzw. A", B", C", D" unterteilt, die sinngemäss einander zugeordnet und solcherart paarweise voll betriebsfähig sind, also einen Überlauf, einen Durchlass 13 und eventuell auch einen Pumpensumpf aufweisen. In den oben dargelegten Betriebsfällen muss dann nicht jedesmal die gesamte Anlage stillgesetzt werden, sondern nur die betreffende Sektion. Eine solche Ausführung hat auch den Vorteil, dass eine gewisse Normierung möglich ist und durch die Wahl der Sektionenanzahl eine Anlage leichter an die jeweiligen Verhältnisse angepasst werden kann. Das ist insbesondere dann zweckmässig, wenn stark unterschiedliche Abwässer angeliefert werden, deren Sortierung durch eine derartige Sektioneneinteilung ermöglicht wird, was eine Erhöhung der Ausnützbarkeit der Anlage bedeutet.

In den Fig.1 und 2 ist noch eine vorteilhafte Weiterentwicklung eingezeichnet. Die über die ganze Breite des Sammelbeckens 1 sich erstreckende Auslaufrinne 22 steht einerseits über die absperrbaren Rohrleitungen 23 mit den Sektionen A', B', C', D' des Sammelbeckens 1, andererseits über die absperrbaren Ausläufe 24 mit den Sektionen A'', B'', C'', D'' des Ablagerungsbeckens 2 in Verbindung. Ferner ist jeder zu einer Sektion gehörige Teilabschnitt der Auslaufrinne 22 gegenüber den benachbarten Teilabschnitten durch eine mit einem verschliessbaren Durchlass versehene Querwand 25 abschottbar. Es kann auch zweckmässig sein, anstelle der Rinne 22 eine Rohr vorzusehen. Die Schlammrinne 5 ist selbstverständlich so anzuordnen, dass der Raum über ihr gut zugänglich und ein Greifer nicht behindert ist.

Im Normalfall strömt in jeder Sektion das Wasser aus dem Sammelbecken über das Rohr 12 in der Trennwand 3 in das Ablagerungsbecken. Nun wird beispielsweise in der Sektion C' eine Reparatur nötig. Das Wasser muss ausgepumpt werden und es könnte nichts mehr der Sektion C'' zufliessen, die damit gleichfalls stillgelegt wäre. Um dies zu verhindern, wird der Durchlass in der Querwand 25 zur Sektion B' hin abgedichtet und jener zur Sektion D' hin geöffnet. Ferner wird in dem zur Sektion C' gehörigen Teilabschnitt er Auslaufrinne 22 die Rohrleitung 23 geschlossen und der Auslauf 24 geöffnet. in dem zur Sektion D' gehörigen Teilabschnitt die Rohrleitung 23 geöffnet und der Auslauf 24 geschlossen. Ein Teil des der Sektion D' zugeführten Abwassers kann daher über die zugehörige Rohrleitung 23 in die Auslaufrinne 22 strömen, darin weiterfliessen in den Bereich der Sektion C' und von dort durch den Auslauf 24 in die Sektion C'' strömen, die somit voll in Betrieb bleibt. Es werden also aus der Sektion D' beide Sektionen C'' und D'' gespeist, denn der andere Teil des Abwassers gelangt wie üblich ohne Umwege von der Sektion D' über das Rohr 12 direkt in die Sektion D''.

Auf gleiche Weise können auch die Sektionen A'' oder B'' von der Sektion D' aus beschickt werden. Ebenso ist auch der umgekehrte Fall möglich, indem z.B. bei einem Ausfall der Sektion B'' das Wasser aus der Sektion B' über die Auslaufrinne 22 in eine der anderen Sektionen A'', C'' oder D'' des Ablagerungsbeckens geleitet wird.

Die Fig.3 zeigt eine im Prinzip ähnliche Ausführung wie die Fig.1. Der Pumpensumpf 11 ist an der tiefsten Stelle des Ablagerungsbeckens 2, an die Trennwand 3 anschliessend, angeordnet. Um auch hier eine lange Verweilzeit des Wassers im Becken 2 zu erzielen, besteht der Überlauf aus einem absperrbaren Tauchbogen 26, der zu einem vom Pumpensumpf möglichst weit entfernten Punkte führt. Zur Vermeidung einer Verwirbelung an der Ausmündung des Tauchbogens - es können auch deren mehrere vorgesehen sein- und zur gleichmässigeren Verteilung des austretenden Wassers ist die Auslaufrinne 27 vorgesehen, welche durch die Wand 28 gebildet ist. Diese weist mehrere Durchlässe 29 auf, jeder mit einem Sieb 30 abgedeckt. Der Betrieb dieser Anlage erfolgt auf die gleiche Weise, wie es für die Ausführung nach Fig.1 beschrieben wurde. Selbstverständlich kann auch bei dieser Anlage eine Unterteilung in Sektionen vorgenommen und sie mit den gleichen Vorteilen betrieben werden, wie es für die Anlage nach den Fig.1 und 2 dargelegt wurde.

Für die erfindungsgemässe Wasserbehandlungsanlage sind natürlich verschiedene weitere Ausführungsmöglichkeiten denkbar. Beispielsweise kann das Ablagerungsbecken aus handelsüblichen grosskalibrigen Rohren bestehen, die mit einem Gefälle zur Trennwand hin angeordnet sind. Sie haben den Vorteil, einerseits leicht beschaffbar, billig und einfach verlegbar zu sein, andererseits entspricht dem eingefüllten Wasservolumen eine spezifisch grössere Oberfläche als bei einem flachen Becken, und der sich absetzebde Feinschlamm ist konzentrierter und nicht auf eine ausgedehnte Grundfläche verteilt. Es ist zweckmässig, mindestens zwei nebeneinander angeordnete Rohre zu verwenden, um auch hier die Vorteile der Sektioneneinteilung sinngemäss ausnützen zu können.

**Patentansprüche**

1. Wasserbehandlungsanlage zur Abtrennung von Schlamm und Freien Kohlenwasserstoffen aus verunreinigten, auch Tenside enthaltenden Abwässern,
dadurch gekennzeichnet, dass von einem grossdimensionalen Sammelbecken (1) mit einer vertieften Schlammrinne (5) zur Aufnahme von Grobschlamm und festen, vom Abwasser mitgeführten Verunreinigungen ein selbsttätiger Überlauf (12,26) für das von den groben Setzstoffen befreite Abwasser zu einem grossflächigen Ablagerungsbekken (2) führt, und dass die beiden Becken (1,2) durch eine Trennwand (3), die mit mindestens einem verschliessbaren Durchlass (13) in der Höhe des angrenzenden Bodens (1o) des Ablagerungsbeckens (2) versehen ist, voneinander getrennt sind.

2. Anlage nach Anspruch 1, dadurch gekennzeichnet, dass der Boden (4) des Sammelbeckens (1) und der Boden (10) des Ablagerungsbeckens (2) ein Gefälle gegen die Schlammrinne (5) hin haben,

3. Anlage nach Anspruch 1, dadurch gekennzeichnet, dass das Ablagerungsbecken (2) einen gegenüber seinem Boden (10) vertieften Pumpensumpf (11) aufweist.

4. Anlage nach Anspruch 3, dadurch gekennzeichnet, dass in Pumpensumpf (11) eine Tauchpumpe (18) stationär angeordnet ist.

5. Anlage nach Anspruch 1, dadurch gekennzeichnet, dass im Sammelbecken (1) vor dem Überlauf (12,26) mit Hilfe einer Lietwand (6) ein beruhigungsraum (7) gebildet ist.

6. Anlage nach Anspruch 1, dadurch gekennzeichnet, dass das aus dem Sammelbecken (1) dem Ablagerungsbecken (2) zuströmende Wasser zuerst in eine Auslaufrinne (22,27) gelangt, aus der es in das Ablagerungsbecken abfliesst.

7. Anlage nach Anspruch 3 und 6, dadurch gekennzeichnet, dass der Pumpensumpf (11) und die Auslaufrinne (22,27) zumindest annähernd einander diametral gegenüberliegend angeordnet sind.

8. Anlage nach Anspruch 1, dadurch gekennzeichnet, dass das Sammelbecken (1) mindestens teilweise durch ein Gitter (9) abgedeckt ist.

9. Anlage nach Anspruch 1, dadurch gekennzeichnet, dass das Sammelbecken (1) und das Ablagerungsbecken (2) in mindestens je zwei einzeln beschick- und entleerbare Sektionen (A', B' bzw. A'', B'') unterteilt sind, die paarweise (A',A'' bzw. B',B'') einander zugeordnet sind.

10. Anlage nach Anspruch 9, dadurch gekennzeichnet, dass die Sektionen (A',B') des Sammelbeckens (1) mit einer gemeinsamen Auslaufrinne (22) in Verbindung stehen, die für jede einzelne Sektion durch eine Querwand (25) abschottbar ist und die zu jeder Sektion (A'',B'') des Ablagerungsbeckens (2) einen Auslauf (24) aufweist.

11. Anlage nach Anspruch 1, gekennzeichnet durch einen Behandlungsbehälter (19) zur Aufnahme des aus dem Ablagerungsbecken (2) abgepumpten, vorgereinigten Wassers.

12. Anlage nach Anspruch 1, dadurch gekennzeichnet, dass das Ablagerungsbecken (2) aus mindestens zwei nebeneinander angeordneten, grosskalibrigen Rohren besteht.

13. Verfahren zum Betrieb der Anlage nach Anspruch 1, dadurch gekennzeichnet, dass das zu behandelnde, verunreinigte Abwasser in das Sammelbecken (1) geleitet wird, in der Schlammrinne (5) sich sammelnder Grobschlamm und feste Verunreinigungen entnommen und nach aussen zur Weiterversorgung transportiert werden, das solcherart von den groben Setzstoffen gereinigte Wasser über den Überlauf (12,26) dem Ablagerungsbecken (2) zugeführt wird, wo sich bei längerer Verrweilzeit Feinschlamm absetzt und an der Wasseroberfläche sich freie Kohlenwasserstoffe ansammeln, die fallweise abgeführt werden, während das nun vorgereinigte Abwasser aus dem Ablagerungsbecken (2) gepumpt und einer Weiterbehandlung zugeführt wird.

14. Verfahren nach Anspruch 13, gekennzeichnet durch eine Regelung der Niveauhöhe im Ablagerungsbecken (2), derart, dass der Pumpvorgang einsetzt, sobald das Niveau eine festlegbare Maximalhöhe erreicht hat, und der Pumpvorgang unterbrochen wird, sobald das Niveau auf eine festlegbare Minimalhöhe abgesunken ist.

15. Verfahren nach Anspruch 13, dadurch gekennzeichnet, dass zur Entfernung der Kohlenwasserstoffe das Abwasser aus dem Ablagerungsbecken (2) bis auf ein betriebsbedingtes Minimum abgepumpt wird und anschliessend die auf der Wasseroberfläche schwimmenden Kohlenwasserstoffe abgepumpt werden.

16. Verfahren nach Anspruch 13, dadurch gekennzeichnet, dass der abgesetzte Feinschlamm, sobald die Mächtigkeit seiner Schicht eine festlegbare Dicke erreicht hat, vom Ablagerungsbecken (2) in die Schlammrinne (3) des Sammelbeckens (1) befördert wird und zusammen mit den dort angesammelten groben Setzstoffen abtransportiert wird.

FIG.1

FIG.3

FIG.2